## Europäisches Patentamt
## European Patent Office
## Office européen des brevets

(19)

(11) Publication number: **0 184 088**
**A2**

(12) # EUROPEAN PATENT APPLICATION

(21) Application number: **85114860.1**

(22) Date of filing: **22.11.85**

(51) Int. Cl.⁴: **G 06 F 9/44**

(30) Priority: **04.12.84 US 678194**

(43) Date of publication of application:
**11.06.86 Bulletin 86/24**

(84) Designated Contracting States:
**DE FR GB NL**

(71) Applicant: **TEKTRONIX, INC.**
**Tektronix Industrial Park D/S Y3-121 4900 S.W. Griffith
Drive P.O. Box 500
Beaverton Oregon 97077(US)**

(72) Inventor: **Alexander, James H.**
**15174 S.W. Barcelona Way
Beaverton Oregon 97007(US)**

(72) Inventor: **Freiling, Michael J.**
**P.O. Box 472
Beaverton Oregon 97075(US)**

(74) Representative: **Liesegang, Roland, Dr.-Ing.**
**Sckellstrasse 1
D-8000 München 80(DE)**

(54) **Expert system.**

(57) An expert system directed toward troubleshooting of electronic circuitry provides a graphic presentation of the circuitry involved. The expert system comprises processor means (10), memory means (12) accessible by said processor means and display means (14) operated by said processor means. When the expert system presents a query to the user, parts or portions of the circuitry, to which the query is directed, are graphically identified in the display means (14). For example, probe icons are graphically presented at circuit points between which measurements are to be made in the corresponding real-world apparatus. After the user makes the required measurement, he can answer the query and receive troubleshooting advice which may include a graphic demonstration of the repair or component replacement that would correct the problem.

FIG. 1

EP 0 184 088 A2

0184088

## EXPERT SYSTEM

### Background of the Invention

The present invention relates to expert systems and particularly to a method and apparatus for providing trouble shooting assistance.

Expert systems as heretofore available have employed a technique known as knowledge engineering to formulate groups of rules for the solution of problems. The rules may be presented to the user by means of a series of questions which require observation by the user and the input by the user of answers to the questions. The expert system will thereupon supply the user with a conclusion or conclusions in accordance with the set of rules. Expert systems have heretofore been employed in fields such as medical diagnosis for logically indicating a patient's status in accordance with a large number of observations. The rules comprising the expert system are typically constructed by so-called knowledge engineers who interview experts in the field in order to derive the body of rules which captures the required expertise.

An advantageous application for an expert system would be for trouble shooting and repair of apparatus such as electronic circuitry wherein a set of rules, answered properly, could diagnose a particular problem or failure encountered. However, because of the complexity of most apparatus, and particularly in the case of electronic circuitry, the use of such an expert system can become tedious to the technician in identifying and conducting measurements with respect to large numbers of components. The expert system should be able to guide the technician easily through a diagnostic

2

0184088

and repair procedure even though the technician is only marginally familiar with the equipment and the manner in which it really operates. The expert system would then replace or minimize constant supervision by more knowledgeable technical personnel.

Summary of the Invention

In accordance with the present invention, in a particular embodiment thereof, a method and apparatus for providing expert information consecutively presents rules including queries to the user, wherein the queries are directed toward parts or portions of the particular subject matter with respect to which a problem has been encountered. Substantially simultaneously with the presentation of a query directed toward a particular part or portion of the subject matter, the user is also provided with a visual representation comprising a diagram or drawing of the subject matter, with graphic identification of the part or portion to which the query is directed. When the expert system is employed for trouble shooting an electronic circuit, a diagram of the electronic circuit is displayed and portions thereof are highlighted or otherwise identified as they relate to a particular query. For instance, if the query directs measurement of a voltage between a pair of points, probe icons are displayed on the diagram at the points where the measurement is to be taken. The associated query may ask the technician to make the measurement on the real apparatus and indicate whether the voltage is greater than or less than a predetermined value. The technician then inputs the answer, causing the expert system to either reach a conclusion or present a further query or rule in logical sequence. If a conclusion is reached that a particular part or component is faulty, then such component or part is graphically identified on the drawing so as to guide the technician in corrective measures to be taken.

It is accordingly an object of the present invention to provide an improved expert system for aiding the user in dealing with complex subject matter.

It is another object of the present invention to provide an improved expert system including graphic identification of the subject matter being dealt with.

It is another object of the present invention to provide a system for trouble shooting assistance in the repair of complex apparatus including electronic circuitry.

It is another object of the present invention to provide an improved trouble shooting system for guiding a technician through a plurality of steps in the repair of faulty apparatus.

The subject matter of the present invention is particularly pointed out and distinctly claimed in the concluding portion of this specification. However, both the organization and method of operation, together with further advantages and objects of the invention, may best be understood by reference to the following description taken in connection with accompanying drawings wherein like reference characters refer to like elements.

## Drawings

FIG. 1 is a block diagram of an artificial intelligence system or work station upon which the expert system according to the present invention is implemented,

FIG. 2 illustrates a typical display provided by the expert system,

FIGS. 3A through 3C are flowcharts illustrating the general operation of the expert system according to the present invention,

FIG. 4 illustrates a subset of a structured interface language employed with the present invention,

FIG. 5 illustrates an expectation table used with the structured interface language,

FIG. 6 is a flow chart for a parser portion of a rule acquisition system, and

FIG. 7 is a flow chart for a rule generation portion of a rule acquisition system.

## Detailed Description

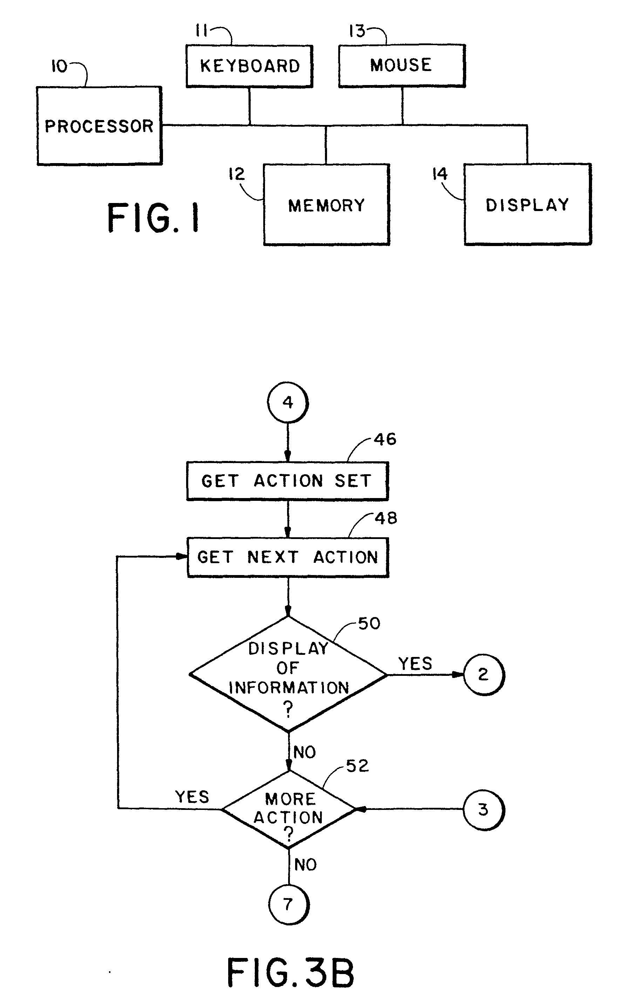

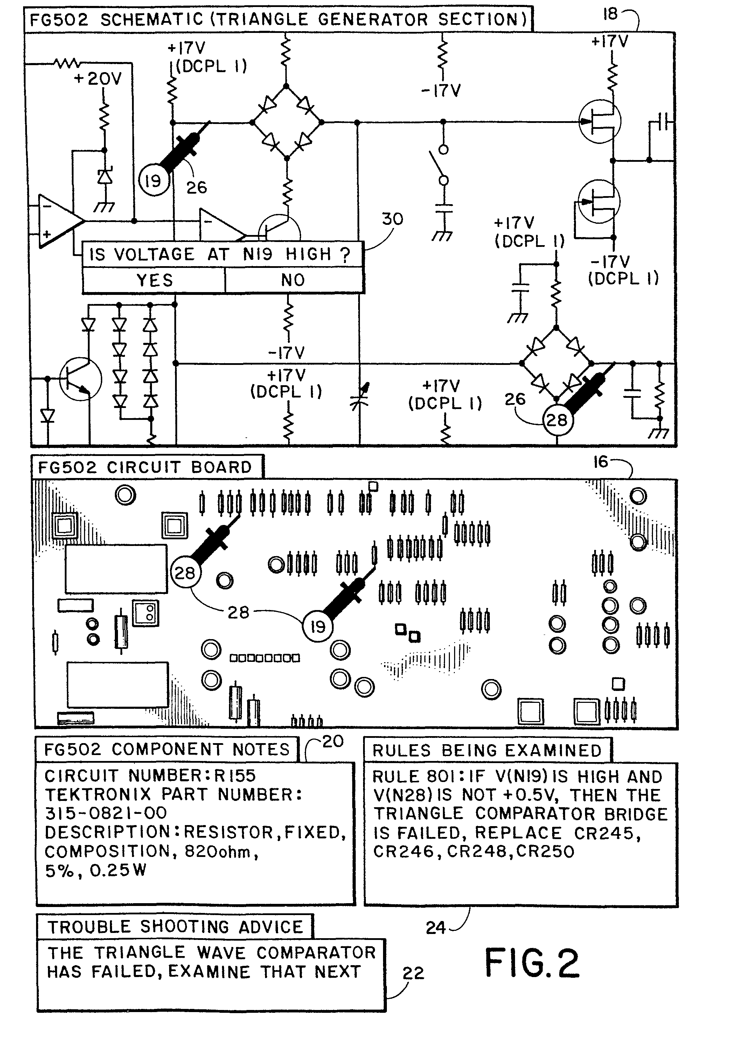

The expert system according to the present invention is implemented on an artificial intelligence system or work station such as a Tektronix 4404AI or a Xerox 1100 or 1132 workstation. Such a system is illustrated generally in FIG. 1 and includes a programmed processor 10 having associated therewith a memory 12 accessible by the processor and a display means or monitor 14 including a cathode ray tube. Also provided are a keyboard 11 and a mouse 13. A typical display generated on the display means is illustrated FIG. 2. In the present example of the expert system, a troubleshooting assistant for a Tektronix type FG 502 function generator is disclosed, but it is understood the expert system according to the present invention comprehends a trouble shooting assistant for any type of apparatus, or alternatively an assistant for solving problems with respect to other subject matter for which a set of rules may be formulated. Rule formulation is more particularly described in a subsequent portion of this application.

The expert system is provided with a bitmapped display, i.e. the memory 12 includes bit maps capable of supplying a diagrammatic representation of particular subject matter on display means 14. In this case the diagrammatic representation comprises schematic and circuit board diagrams of the aforementioned FG 502 function generator (triangle generator section). The bitmapped display supplies a drawing 16 of the circuit board, a corresponding circuit schematic diagram 18, and is further provided with three windows 20, 22 and 24. Each component and significant node in a diagram is stored as an "object" programmed in SMALLTALK. Each SMALLTALK object, called a "diagram component instance", contains as part of the data structure the coordinates of a bounding box in the diagram including the object of interest, or in the case of a node, of the point representing that node in the diagram. A collection of icons, for example probe icons 26 and 28 in FIG. 2, are stored as SMALLTALK objects of the type "icon instance". SMALLTALK objects of the form "icon instance" can accept a message which causes the icons to be displayed at a particular location on the diagrams. SMALLTALK objects of the form "icon instance" may also accept a message which causes the icon to be visibly moved across the screen from one known location to another. A rule processor part of the expert system program processes rules which request individual actions of the type display or translate, and dispatches the request to whichever icon is appropriate.

A display icon representing a probe may be displayed at the location where a measurement is to be performed. The diagram display region containing the object to be removed may be blanked out and a moveable icon may also be constructed from the blanked out area. The last mentioned icon may be moved across the screen and deposited in a separate screen area. An icon representing a new part to be inserted can be moved across the screen to the diagram location where a substitution is to take place. The latter icon is then merged with the diagram to form an appropriate picture of the appearance of the new configuration. The illustrated embodiment as hereinafter more fully described mainly implements icons of the probe type, i.e. where the icon represents a measuring probe such as oscilloscope probe, digital multimeter probe, high voltage probe, or the like.

Referring again to FIG. 2, the system according to the present invention suitably employs schematic-to-board cross referencing such that the user may utilize a mouse or other pointing means to identify a component part on the schematic 18. A corresponding part on the circuit board diagram 16 will be automatically identified. The part pointed to on schematic 18 employing the mouse may be caused to reverse its color and the corresponding component on the circuit board representation 16 will also reverse color. The user will then not have to trace through part numbers in a technical manual to locate the particular component on the circuit board preparatory to making a test or measuring a voltage with respect to a component on the corresponding real world circuit board. The particular component may be simultaneously identified using alphanumeric characters in window 20 in FIG. 2. This cross referencing of corresponding parts is implemented in a manner known to those skilled in the art.

Similarly, the system memory may store a plurality of waveform representations in bit-map form depicting the correct signals which should appear at given circuit nodes. Employing a probe icon, the user may select a given node and open another window (not shown) within which the correct waveform is displayed. This type of information retrieval is also implemented in a known manner.

In accordance with the present invention, a plurality of rules are consecutively presented to the user wherein the rules include conditions involving queries about measurements the user can make in the corresponding real world circuit. The locations where the measurements are to be made are consecutively identified utilizing probe icons 26 and 28 in the schematic and circuit board representations 18 and 16. As the user answers the queries regarding measurements he has made, further conditions and/or rules are presented to the user which will eventually result in an action set or trouble shooting advice for indicating to the user the action which is needed in order to repair the circuit board. As hereinbefore described, in addition to identifying a faulty component or components. e.g. by highlighting the component, an

0184088

action sequence may illustrate the removal of the faulty component from the board and replacement with a substitute component.

Referring again to FIG. 2, a query is presented in window 30 relative to the voltage at node 19 (identified by the probe icon 26 incorporating the numeral 19 as part of the probe). The user is able to identify the location where the measurement is to be taken in the real world circuit for answering the query because of the positions of the probes 26 and 28, incorporating the node identification 19, on the display. After making the measurement on the real world version of the circuit board, a mouse or other pointer may be employed by the user, in menu fashion relative to window 30, to select either the YES or the NO answer. As the consultation progresses, the technician also views windows 22 and 24 in FIG. 2, with trouble shooting advice being given in window 22 while the rule currently being examined is displayed in window 24. It is noted the trouble shooting advice in window 22 will ordinarily indicate the next step to be taken. As the system asks further questions, the answers given by the user will eventually identify the faulty component which can then be highlighted and/or moved relative to the schematic and circuit board representations. The system thus uses icons to demonstrate to the technician the action that must be taken at any point of time in the diagnosis. This is done by displaying icons at appropriate test locations, and/or in graphically representing a sequence of actions that must be performed.

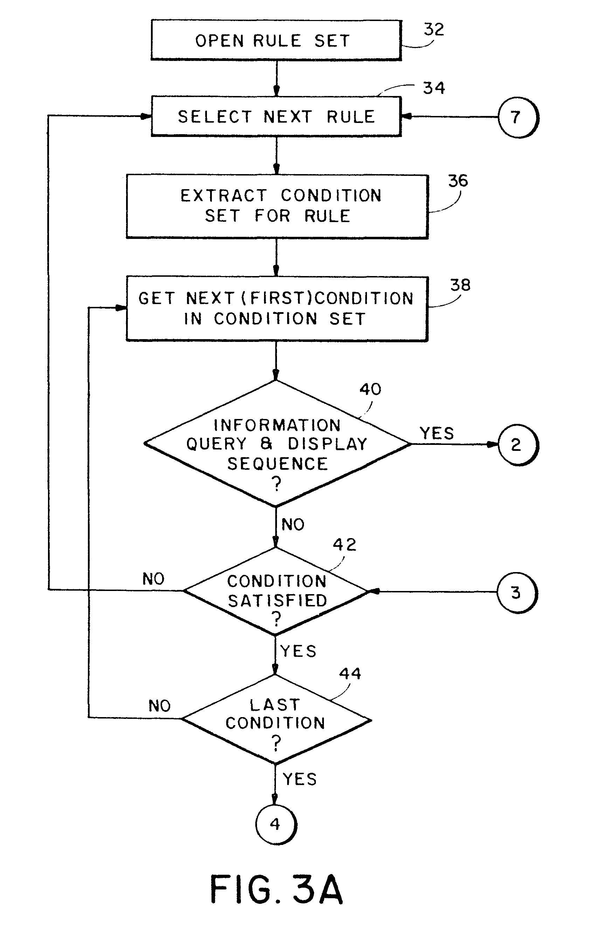

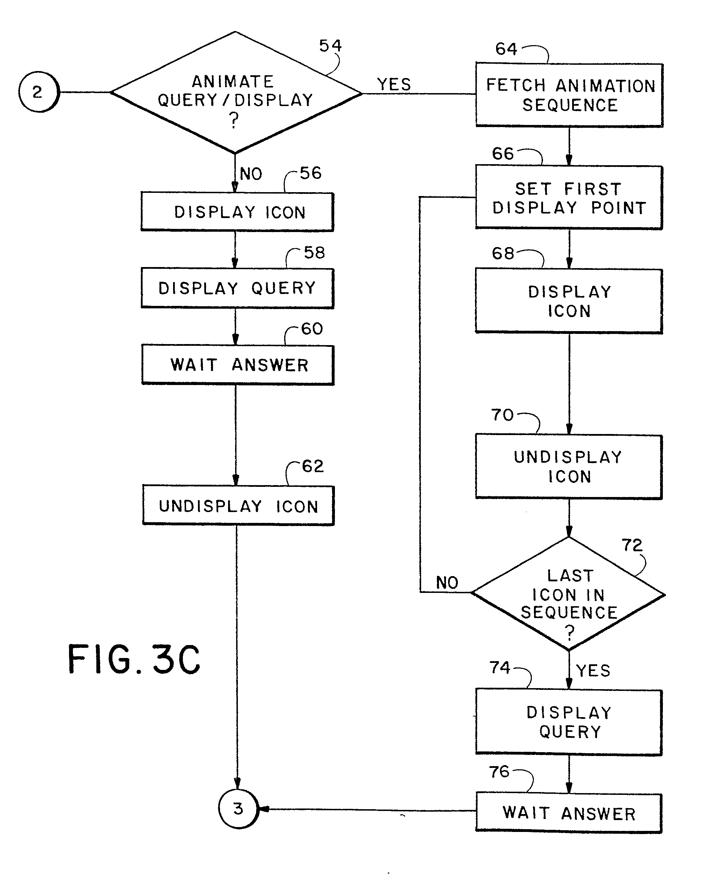

The program in accordance with the present invention is illustrated in general flow chart fashion in FIG. 3. The system operates in accor-

0184088

dance with a set of rules, as hereinafter more fully described, and these rules are stored in a dictionary (in memory) in the order that they are to be examined. Each rule is taken from the dictionary and asked to evaluate itself. A rule evaluates itself by examining one or more conditions that govern the applicability of the rule and these conditions are examined one by one in order.

Referring to FIG. 3A, the rule set is opened in block 32 and a first rule (or the next rule in sequence) is selected in block 34. In block 36 a condition set is extracted for the particular rule under consideration, while the next (or first) condition in the condition set is selected in accordance with block 38. In decision block 40, it is ascertained whether the condition contains a query/display sequence and if the answer is yes, the program proceeds to decision block 54 in FIG. 3C where the question is asked whether the query includes an animation sequence, i. e. the moving portion of the circuit or a component thereof from one location to another. If the answer to this question is no, then the query is understood to call for displaying an icon or icons (such as illustrated at 26 and 28 in FIG. 2) whereby the location or locations of measurements to be taken for answering the query are identified. The icon is displayed per block 56. The query (or other comment) is displayed in window 30 in FIG. 2 in accordance with block 58 of the flow chart. An answer is awaited in block 60, i. e. a selection by the technician of either a yes or no answer in window 30, in answer to the query posted in window 30. After the technician indicates the answer, the icon is "undisplayed" in block 62.

The pointing sequence operates as follows. The query/display has an address for the pointing location. The proper icon is sent a message to display itself at the appropriate location, and in displaying itself, the icon also stores a picture of the background that it is occluding. The query is generated in window 30 and the answer is awaited. Once the answer to the query is received, the icon is undisplayed by redisplaying the occluded background previously stored.

The animation sequence operates in a similar fashion. The principal difference is that there is a series of display actions at a sequence of points which are calculated from the path between the start and finish locations of the animation sequence. In block 64, an animation sequence is fetched when the decision from block 54 is that an animation sequence is desired. The first display point is set in block 66 followed by the display of an icon in block 68. The icon in this case may comprise a portion, part or node of the circuit diagram rather than a probe icon or the like. An icon or icons are displayed at successive points to indicate movement in accordance with display actions at the series of points. The first icon is undisplayed in block 70, and in decision block 72 it is determined whether the last displayed icon is the last icon in the sequence. If it is not, return is made to block 66. If it is, then a display query or other window indication as may be associated with the sequence is displayed according to block 74. The technician's answer, as by menu selection in window 30, is awaited in block 76. Return from either block 62 or 76 is made to decision block 42 in FIG. 3A.

Returning to FIG. 3A, if there is either no information query and display sequence, or if the information query and display sequence is concluded, decision block 42 is entered and it is determined whether the particular condition is satisfied, i. e. whether the user has given an answer which will lead to the next condition in a diagnostic sequence or if the last condition has been satisfied such that some conclusion can be made. If the condition is not satisfied, return is made to block 34 and a next rule is tried. If the condition is satisfied, decision block 44 is entered and it is determined whether the condition is the last condition for the particular rule under consideration. If it is not, return is made to block 38 and a next condition associated with the rule is fetched. If it is the last condition, then block 46 in FIG. 3B is entered to acquire an "action set".

The action set involves some kind of conclusion or possibly an animated movement for graphically demonstrating to the technician the particular curative action which is to be taken. An individual "action" is selected in block 48, and decision block 50 is entered where it is determined whether information is to be displayed. If it is, the sequence of FIG. 3C is again entered via decision block 54. If no animation sequence is directed, the path on the left side of the drawing is selected, and an icon, if any, is displayed in block 56 and/or a particular part or component, e.g. a faulty part or component, is highlighted. In block 58, a conclusion in the nature of troubleshooting advice is directed for window 22 in FIG. 2. No answer is awaited in block 60. The icon, if any, is again undisplayed in block 62, and return is made, in this instance, to decision block 52 in FIG. 3B.

If an animation sequence is selected via decision block 54 in FIG. 3C, the animation sequence is fetched in block 64 and the first display point is selected in block 66. Again, there may be a series of display actions at a series of points which are calculated from the path between the start and finish location of the animation sequence. The icon, displayed according to block 68, may comprise a part or portion of the circuit rather than a probe icon, and this part or portion of the circuit, for example indicating a faulty component, may be moved across the display to a "work bench area" or the like. The icon may then be undisplayed in block 70 and a determination is made according to block 72 whether there is another icon in the sequence. If there is another icon in the sequence, return is made to block 66 and another icon is displayed according to block 68. This icon may comprise a new component from a "parts bin" which can be moved across the display to the location formerly occupied by the faulty component, thereby illustrating the needed action to the technician operating the system. A conclusion, e.g. troubleshooting advice in window 22, is displayed according to block 74, and assuming no answer is required, return is made to decision block 52 in FIG. 3B where it is determined whether further actions are involved. If there are, then return is made to block 48.

In this manner, a number of rules are explored, and assuming the technician selects the "right" answers which would indicate some particular curable fault in the circuit, then the technician is advised of the correct action. If the technician does not make the "right" answers, then the system proceeds to the next rule for further exploration of the possible difficulties that may be involved in the circuit. It will be appreciated the corrective action suggested is dependent upon the rules initially formulated and it is not understood that a particular set of rules which may have been formulated by an expert technician will in every case enable a less experienced technician to repair the circuit. The efficacy of the system is based on the proposition that in many cases the expert knowledge built into the system will save the novice technician considerable time in evaluating possible problems.

Software for implementing the expert system according to the present invention is more fully disclosed in Appendix D in the concluding portion of this specification. The program includes three major components: a diagram manager, a rule processor, and a communications manager. The diagram manager can support several diagrams relating to the task at hand and manages the pointing relationships, e.g. by probe icons and the like, among these diagrams and between the diagrams and the rule processor. The rule processor interprets diagnostic rules to suggest troubleshooting operations to the technician. The rule processor decides which rules to process, i. e. which tests to perform next, and then sends off a request to the diagram manager to highlight or point with an icon to whatever parts or circuit points are relevant to that test. The communications manager consists of routines to handle miscellaneous display requirements such as English rule text and question-answer dialogues in the windows. This communication manager generates the questions, e.g. in window 30 in FIG. 2, and accepts answers via the same window.

In the software of Appendix D, the word "and" in the "if" part of a rule separates the various conditions. Frequently a rule includes but one condition. Again, example rules are given for checking the aforementioned FG502 function generator circuit.

A separate rule acquisition subsystem is employed whereby the rules can be formulated and entered. As in the case of the expert system, the rule acquisition subsystem is not useful solely to the repair or troubleshooting of some particular apparatus such as the FG 502 Tektronix Function Generator employed as an example herein, but rather this rule acquisition system can be utilized for generating rules in a number of related environments for solving related problems. Problems of this type may be referred to as expert family problems. Perhaps the most natural examples occur in automatic troubleshooters for a variety of similar devices such as electronic instruments. Thus, rather than providing a custom-made expert system for each problem to be solved or apparatus to be repaired, the rule acquisition system is effective for generating rules for a family of problems employing a common task model.

It is desirable to obtain the rules from the expert (e.g. an experienced technician) in an automatic or semi-automatic manner, without ambiguity, wherein the rule is easily traced and an explanation of conclusions can be derived. This should be accomplished without the assistance of a human "knowledge engineer". Formulating rules in arbitrary natural language has not been found effective for accomplishing these purposes. Rather, in accordance with the present invention, a dual medium is utilized combining diagrams or graphical presentations relative to the problem with a restricted formal language, called a struc- . tured interface language, that presents an English-like syntax at the surface level, while providing an underlying semantics which serves as the task model.

The goal of an expert system interface technology can be seen as achieving cognitive transparency. Many modes of thinking about a problem have been found to be non-linguistic in nature. When engaged in non-linguistic reasoning, diagrammatic communication can effectively reduce the cognitive overhead which limits cognitive transparency. A pointing paradigm is applied to diagrammatic representations and menus to assist in effective communication.

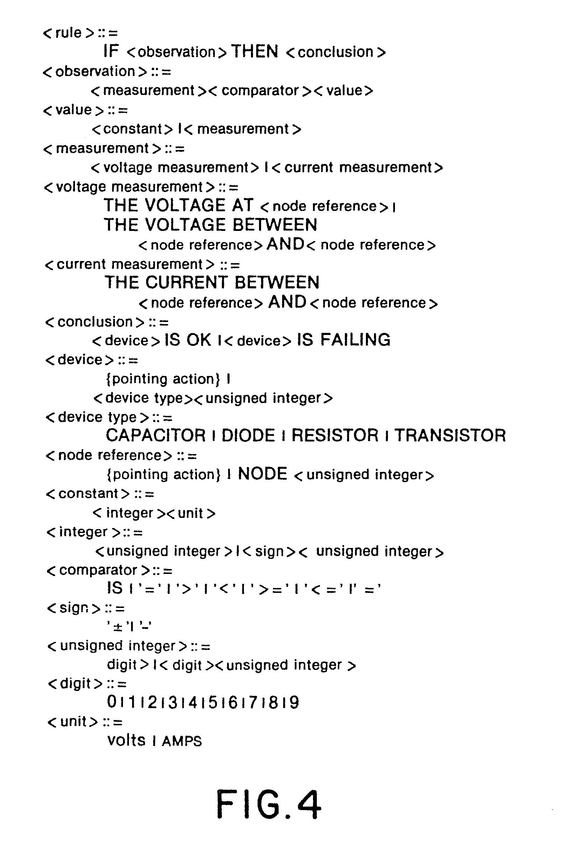

In accordance with an embodiment of the present invention, a structured interface language for acquiring rules used in troubleshooting systems known as GLIB (General Language for Instrument Behavior) is employed and is described more fully at the conclusion of this specification in Appendix A. A simple subset of GLIB is shown in FIG. 4. The subset illustrated is concerned solely with the acquisition of simple diagnostic rules and is not intended to represent the complete acquisition language. In the subset illustrated in FIG. 4, observations are limited to a single relationship between a measured value and a constant or other

**0184088**

measured value. Conclusions are limited to the observations that a device is either functioning correctly or is failing.

There are several ways in which a structured interface language such as GLIB can be presented to the expert technician for rule acquisition. One is menu-based acquisition which is a technique wherein the expert does not generate or complete rules on his own, but rather a menu displays alternative choices for each word in the rule as it is being selected. A single menu is employed consisting of only terminal tokens to choose from at any point in time.

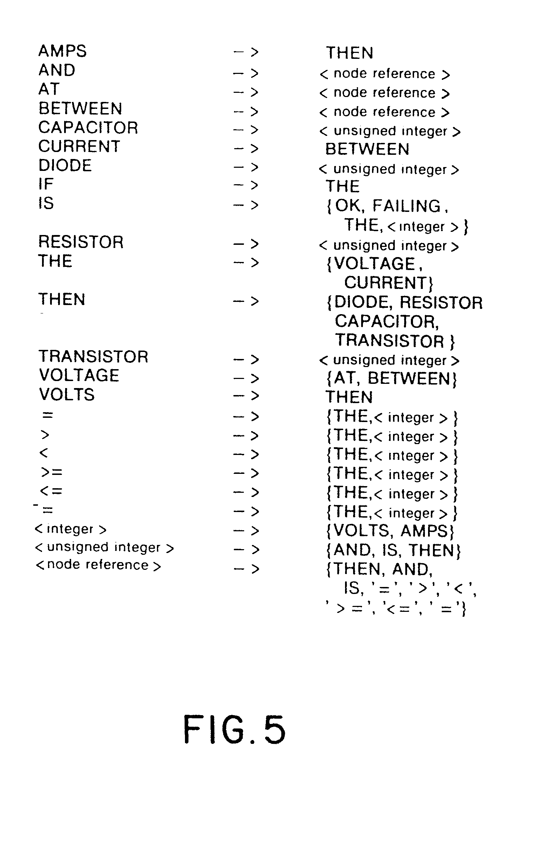

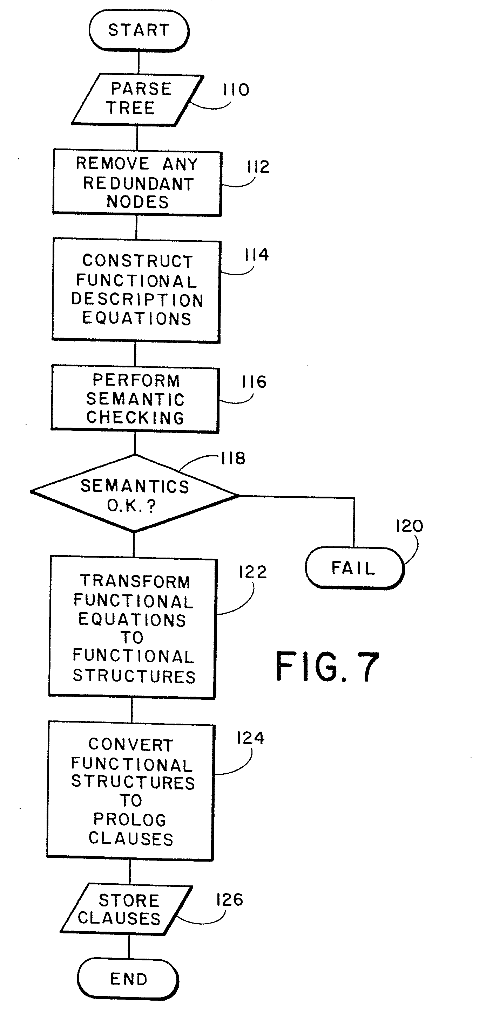

To support menu-based acquisition, the GLIB rules are processed to produce an expectation table utilized to determine which words are syntactically admissible at any point in a sentence, so that the correct menu can be constructed. An example of an expectation table, based only upon the previous word, is illustrated in FIG. 5.

The following example illustrates menu-based rule acquisition using the GLIB subset of FIG. 4 and the expectation table of FIG. 5. Since all the rules in this example must begin with the words "IF THE", these need not be selected at all. Instead they are added to the rule automatically. This provides the user with a starting point from which to generate the rest of the rule:

(1)   IF THE

```
| VOLTAGE |
| CURRENT |
```

After selecting VOLTAGE from the menu, the next choice to be made is whether the VOLTAGE is of a single point (with respect to ground) or between two points.

(2)   IF THE VOLTAGE

```
OF
BETWEEN
```

Now a node in the schematic may be referenced by either pointing to it or typing in the name.  Our user chooses the latter.

(3)   IF THE VOLTAGE OF

```
NODE
point to node
```

A number must be typed in at this point.

(4)   IF THE VOLTAGE OF NODE

```
type a number
32
```

Some comparison operator must be chosen next.

(5)   IF THE VOLTAGE OF NODE 32

```
AND
IS
=
>
<
>=
<=
=
```

A constant value is next chosen for comparison.

(6)   IF THE VOLTAGE OF NODE 32 IS

```
THE VOLTAGE
THE CURRENT
number
```

```
type a number
3
```

Then a unit must be picked.  In this subset of GLIB, VOLTS and AMPS are the only possible units.

(7)   IF THE VOLTAGE OF NODE 32 IS 3

```
VOLTS
AMPS
```

THEN is filled in automatically.  Now a device must be specified as working or broken.

(8)    IF THE VOLTAGE OF NODE 32 IS 3 VOLTS THEN

> CAPACITOR
> DIODE
> RESISTOR
> TRANSISTOR
> *point to a device*

If the expert chooses a device type, then the reference is made explicitly by typing the device number.   In this case, the user points directly at the schematic employing a mouse or the like.

(9)   IF THE VOLTAGE OF NODE 32 IS 3 VOLTS THEN TRANSISTOR 6 IS

> OK
> FAILING

Finally the expert decides that transistor 6 must be O.K., and the rule is completely assembled as follows.

(10)   IF THE VOLTAGE OF NODE 32 IS 3 VOLTS THEN TRANSISTOR 6 IS O.K.

Menu-based acquisition is not the only way to present a structured interface language. A more general structured interface language processor supports acquisition via typing or graphic selection or a mixture of the two. The pointing paradigm can be successfully used to enhance the cognitive transparency wherein each act of pointing is viewed as a linguistic act, namely a reference to the object being pointed at. Whenever it is appropriate to refer to an object in the GLIB sentence, the expert may instead point to an element in the diagram. The mechanism for referencing elements in a diagram is described hereinabove.

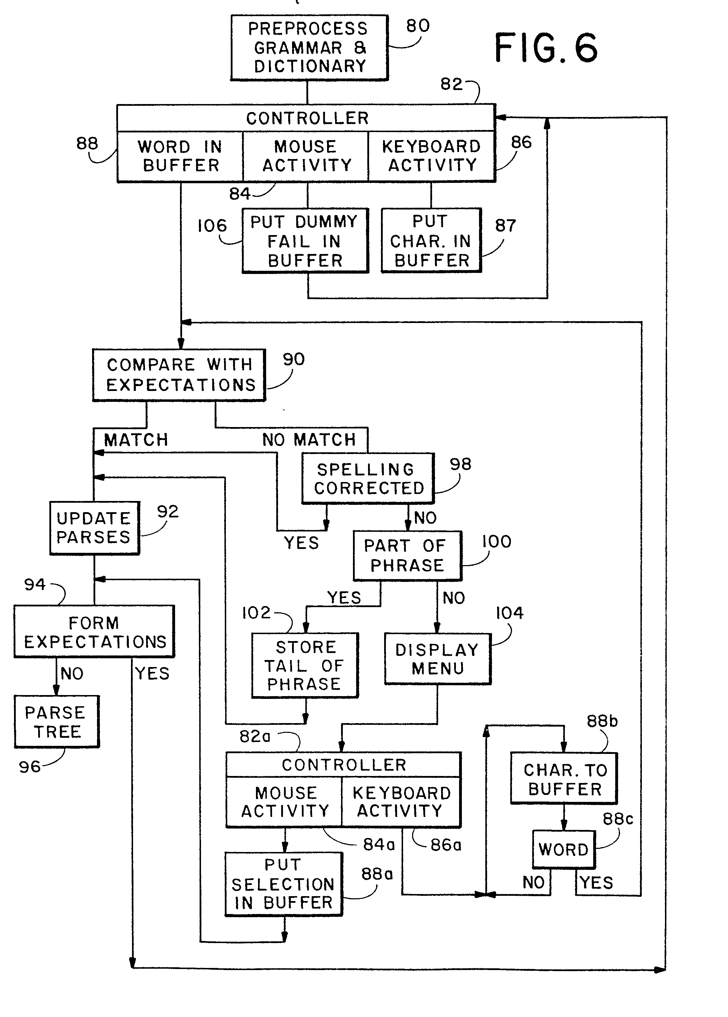

A more generalized and sophisticated structured interface language processor is illustrated by means of the flow charts of FIGS. 6 and 7. The processor operates on an artificial intelligence system or workstation as hereinbefore disclosed. The knowledge engineer is not required to cast expert knowledge into a specific form for rules or rule compenents (which may be referred to as task ontology), but rather the rule acquisition process is more automated. Instead of engineering a generic structural form, the present invention involves capture of the ontology as well, and defines a complete grammar for acceptable utterances which can be converted into rules. The grammar and ontology can be completely defined for a whole class or family of problems for which it is necessary to build expert systems. A grammar appropriate for the present example is given in Appendix E and an ontology is given in Appendix F.

The mechanism for acquisition of the expert knowledge consists of two parts: a parser for GLIB which allows the user to generate a statement in GLIB as illustrated in Fig. 6, and a rule generator depicted in FIG. 7. In the present example, the GLIB parser is coded in SMALLTALK, and the rule generator is coded in SMALLTALK and generates rules coded in
PROLOG. The parser assists or guides the expert.

Referring to FIG. 6, operation begins by the
insertion of a grammar and dictionary of the GLIB
language indicated at block 80 in FIG. 6. The
grammar and dictionary are preprocessed to generate
appropriate data structures for operation. In
addition, initial expectations (similar to the
expectation table of FIG. 5) are generated.

Interactions all go through controller 82
which senses mouse activity 84 and keyboard
activity 86, collecting characters and tokens in
buffer 88. Characters are placed in the buffer as
indicated by block 87. When a word appears in the
buffer 88 it is compared with the expectations
generated from the preprocessed grammar and
dictionary. In the event of mouse activity, a
"dummy fail" is placed in the buffer as indicated
at 106 so that mouse activity can direct further
selection as further noted in blocks 84a and 88a to
which reference is made hereinbelow. If there is a
match with expectations, a parse tree is updated
and next expectations are generated. If there are
no expectations, the statement is completed, and
the parse tree is passed to the rule generation
component. The comparison with expectations is
indicated in block 90 and if the comparison is
favorable, the parse tree is updated in block 92.
Next expectations are then generated in block 94
with a return to block 90 for comparison. If there
are no further expectations, the statement is completed, and the parse tree is passed to the rule
generation component of the system as indicated at 96.

When there is no match to the expectations, a
series of steps are taken to correct the input to match one of the expectations. First a spelling corrector is invoked as indicated at block 98. If a match can occur with the spelling corrected, the procedure continues as before. If not, a phrase completion is attempted in block 100. If phrase completion is successful in generating a match, the procedure continues as before, with the tail of the phrase being stored as indicated in block 102. Finally if neither spelling correction or phrase completion is successful, the controller at 82a provides a menu which is displayed to the user as indicated in block 104. If the user selects a menu item, i. e. from possible expectations, the procedure continues with the selected item as specified by mouse activity at 84a and it is placed in the buffer as indicated at 88a. If the user inputs key strokes as indicated at 86a, the character is placed in the buffer at 88b and when a word is completed as indicated by block 88c, the processing goes back to compare with an expectation by return to block 90. The mouse also implements the pointing paradigm for rule acquisition as hereinbefore mentioned.

The GLIB parser as illustrated in FIG. 6 is employed for the purpose of compiling results into forms dictated by rule construction grammar. The parser provides a parse tree which creates a structure that represents the meaning of the terminology. The parse tree shows the grouping and the relationship of words in a sentence, rather than just listing a series of words. In other words, associations are captured in the parse tree and these associations are used to provide an internal representation of the rules as well as an understandable representation thereof. The parse tree establishes the proper "bracketing" of an input
sentence such that the burden of establishing this
bracketing for association is not required of the
expert user.

A second part of the mechanism for rule generation, i. e. the rule generator, as depicted by the
flow chart of FIG. 7, receives parse tree information
from the GLIB parser and uses the same to generate
rules coded in PROLOG.  After receiving the parse
tree at block 110 in FIG. 7, the rule generator
examines the nodes generated in the parse tree.
Redundant nodes will be removed in block 112.  The
resultant data structure will be used to construct
equations which functionally describe the statement,
as noted in block 114.  At this point, the semantics
of the system may be checked.  Semantics are optionally
checked in blocks 116, 118 and 120.  Processing continues if the semantics are acceptable, or if no
semantic checking is performed.  The equations are
unified to resolve variable references and transformed into a data structure in block 122 which gives
a functional definition of the statement.  Finally,
this functional structure is converted to PROLOG
clauses in block 124 which are stored as indicated in
block 126 for use as components of the expert system.

The GLIB acquisition grammar has the form of a
semantic grammar where grammatical categories are
based not on the theory of syntax, but instead on
semantically meaningful units in the structures being
acquired.  For instance, sample semantic categories
are <rule>, <observation>, <conclusion>, etc.  In
construction of a rule generation grammar to parallel
the rule acquisition grammar, for each projection of
the form:

$$<cat-0>::=G(<cat-1>,<cat-2>, \ldots ,<cat-n>)$$

in the rule acquisition grammar (where cat stands for category), there is a corresponding generation production of the form:

$$F(<cat-0>)->H(F(<cat-1>),F(<cat-2>), \dots ,F(<cat-n>))$$

which determines the form of the resulting rule fragment, based on the combining function (H) of the fragments of the rule constituents (F(<cat-i>)) as defined by the semantic grammar.

Considering the parser and rule generator in greater detail, it will again be noted that the parser permits sentences to be created by selecting successive words or phrases from menus or by typing. The parser is able to check each word as it is entered by using an incremental, breadth-first parsing algorithm on the semantic grammar (GLIB). "Breadth-first" refers to the processing of all nodes at one parse tree level before proceeding to another level. The algorithm simultaneously considers all possible parses for the partial sentence so far entered. The semantic grammar (GLIB) combines syntactic and semantic information so that both the form and the meaning of a sentence are checked together. The use of a semantic grammar permits real time processing of both syntax and semantics. If a particular word does not match any of the current partial parses, the parser provides feedback to the expert operator, i.e. it builds a menu from all possible next steps in the parses and presents this menu to the operator for him to select a legal continuation.

The parser builds an internal data structure which represents the syntactic structure of the completed GLIB statement. This syntactic representation comprises a parse tree. The parser parses incrementally from left to right and performs all checking on each word as it is entered.  The parser
follows the left-corner algorithm (see "On the
Relative Efficiencies of Context-Free Grammar
Recognizers" by Griffiths and Petrick, Communications of the ACM, May, 1965) modified to a parallel
format so that it can follow all parses simultaneously.  This algorithm builds phrases bottom-
up from the left corner, i. e., rules are selected
by the first symbol of their right-hand-sides.  For
example, given a phrase initial category c, a rule
of the form X->c... will be chosen.  The
remaining rule segments of the right-hand side are
predictions about the structure of the remainder of
the phrase and are processed left-to-right.  Subsequent inputs will directly match successive rule
segments if the latter are terminal symbols of the
grammar.  When a nonterminal symbol is encountered,
a subparse is initiated.  The subparse is also
constructed bottom-up from the left corner,
following the rule selection.  When an embedded
rule is completed, the phrase formed may have the
structure of the non-terminal category that originated the subparse and so complete the subparse.
If there is no match, it will become the left-
corner of a phrase that will eventually match the
orignating category.  The parser includes a reach-
ability matrix (see Griffiths and Petrick supra) to
provide top-down filtering of rule selection.

The parser assigns a rule to an object instance of
class "constituent" that attempts to match the rule
against input as described above.  Several constituent
instances may exist simultaneously to track alternative
parses.  A detailed description of object-oriented
parsing can be found in "An Object-oriented Parser for
Text Understanding" in "The Proceedings of the Eighth International Joint Conference on Artificial Intelligence", Karlsruhe, West Germany, 1982, pages 690-692, published by William Kaufmann, Inc., Los Altos, California.

Parsing is driven by a "lookahead dictionary", a refinement of the expectation table mentioned on page 16. This associates constituent instances with the words that will advance their state. Through this dictionary those constituents that accept the current input are found and their state advanced according to the parsing algorithm. A new lookahead dictionary is then formed by interrogating the updated instances for their next rule segments. These segments are translated into words using a reverse dictionary. If no matches for the input are found, the lookahead dictionary's keys are used to form the aforementioned menu used for operator selection. It is seen that the program can guide an expert technician through sentence creation to keep him within GLIB. Assistance is only invoked when the technician deviates from GLIB.

As noted, the parser creates a parse tree. As an example, if the parser were given the following simple semantic grammar:

```
<rule>       -> IF <condition> THEN <conclusion>
<condition>   -> <indicator> IS <state>
<conclusion>  -> <device> HAS FAILED
```

and the following sentence:

IF LED-2 IS ON THEN TRANSISTOR-17 HAS FAILED it would produce the following parse tree:

This parse tree is next processed to convert it from a syntatic representation into a semantic representation.

The parse tree which is actually produced is slightly different from the one shown. The parser accepts a lexical-functional grammar (which also describes GLIB) and produces a parse tree which includes functional equations for each constituent. These functional equations describe the semantic relationships of a constituent to its neighboring constituents. Going back to our example, a lexical functional form of the grammar would be:

$$(\textrm{\textasciicaron CNCL})=\textrm{\i}$$
$$(\textrm{\textasciicaron COND})=\textrm{\i} \qquad (\textrm{\textasciicaron FORM})=<\textrm{rule}(\textrm{\textasciicaron COND}, \textrm{\textasciicaron CNCL})>$$
$$<\textrm{rule}> \quad --> \quad \textrm{IF} <\textrm{condition}> \textrm{THEN} <\textrm{conclusion}>$$

$$(\textrm{\textasciicaron STATE})=\textrm{\i}$$
$$(\textrm{\textasciicaron IND})=\textrm{\i} \qquad (\textrm{\textasciicaron FORM})=<\textrm{state}(\textrm{\textasciicaron IND}, \textrm{\textasciicaron STATE})>$$
$$<\textrm{condition}> --> <\textrm{indicator}> \textrm{IS} <\textrm{state}>$$

$$(\textrm{\textasciicaron DEV})=\textrm{\i}$$
$$(\textrm{\textasciicaron FORM})=<\textrm{status}(\textrm{\textasciicaron DEV}, \textrm{failed})>$$
$$<\textrm{conclusion}> --> <\textrm{device}> \textrm{HAS FAILED}$$

The corresponding parse tree for our sample rule is:

```
                                <rule>
                                                      (↑ CNCL)=↓
              (↑ COND)=↓                      (↑ FORM)=<rule(↑ COND, ↑ CNCL)>
   IF         <condition>           THEN        <conclusion>
           (↑ FORM)=<state(↑ IND, ↑ STATE)>
   (↑ IND)=↓      (↑ STATE)=↓              (↑ FORM)=<status(↑ DEV, failed)>
   <indicator>  IS  <state>                (↑ DEV)=↓
                                           <device>   HAS FAILED

   LED-2          ON                        TRANSISTOR-17
```

We interpret this as saying that a rule has a condition part, COND, and a conclusion part, CNCL, and is printed in clausal-form as "rule (COND, CNCL)." The up-arrows (↑) and down-arrows (↓) are meta-symbols which refer to parent node (↑) or to the node to which the equation belongs (↓). A parse tree with attached functional equations is referred to as a constituent-structure, or c-structure. C-structures are actually produced by the parser instead of simply a parse tree. This is more efficient than building a parse tree and then attaching the functional equations at a later time.

C-structures are converted to functional-structures, or f-structures, in the second phase or rule generation phase of the program. For further information on how this is accomplished, reference is made to Kaplan and Bresnan in "The Mental Representation of Grammatical Relations" edited by J. W. Bresnan, M.I.T. Press, 1982. The functional equations may be solved by instantiating the meta-symbols with actual nodes and assigning properties and values to the nodes according to the functional equations. In the example given, all equations are of the form "(↑ property) = value" where "value" is always ↓ . This says that a node pointed to by ↓ is the indicated property of the parent node (pointed to by ↑ ).

The f-structure for our example is:

$$
\begin{bmatrix}
\text{COND} & \begin{bmatrix} \text{IND} & \text{led-2} \\ \text{STATE} & \text{on} \\ \text{FORM} & <\text{state}(\uparrow \text{IND}, \uparrow \text{STATE})> \end{bmatrix} \\[2em]
\text{CNCL} & \begin{bmatrix} \text{DEV} & \text{transistor-17} \\ \text{FORM} & <\text{status}(\uparrow \text{DEV}, \text{failed})> \end{bmatrix} \\[1em]
\text{FORM} & <\text{rule}(\uparrow \text{COND}, \uparrow \text{CNCL})>
\end{bmatrix}
$$

The final phase of the program interprets the f-structures to produce PROLOG clauses. Most of the information required to produce the clauses is contained in the "form" property, as in the example. However, certain ordering is accomplished by the program. If the program were given the example used above we would find that it produces the PROLOG clause:

rule (state (led-2, on), status (transistor-17, failed).

which may be interpreted as "if the state of indicator led-2 is "on" then the status of device transistor-17 is "failed" or less formally,

IF LED-2 IS ON THEN TRANSISTOR-17 HAS FAILED as above. The program for the example of the parser and rule generator is attached hereto as Appendix G.

While a preferred embodiment of the present invention has been shown and described, it will be apparent to those skilled in the art that many changes and modifications may be made without departing from the invention in its broader aspects. The appended claims are therefore intended to cover all such changes and modifications as fall within the true spirit and scope of the invention.

Claims

1. A method of providing expert information regarding a particular subject matter with respect to which a problem solution is sought, c h a r a c t e r i z e d by the steps of: consecutively presenting a plurality of rules wherein said rules include queries directed toward parts or portions of said particular subject matter, and visually providing a diagrammatic representation of said particular subject matter substantially simultaneously with a said query, including graphic identification of the part or portion on said subject matter to which the query is directed.

2. The method according to claim 1, c h a r a c t e r i z e d by visually supplying a solution output in response to answers to said queries.

3. The method according to claim 2, c h a r a c t e r i z e d by visually supplying a solution output includes graphic identification of a part or portion of said subject matter.

4. A method of providing troubleshooting assistance regarding an apparatus with respect to which a technician desires to accomplish repair, c h a r a c t e r i z e d by the steps of: presenting rules including queries directed toward component portions of said apparatus, providing a diagrammatic representation of said apparatus substantially simultaneously with a said query including graphic identification of the component portion with respect to which a query is made, and in response to an answering input by said technician, graphically identifying a failed component portion.

5. The method according to claim 4, c h a r a c t e r i z e d in that said rules logically define a testing procedure for identifying said failed component portion.

6. The method according to claim 4 or 5, c h a r a c t e r i z e d in that said graphic identification includes iconic designation on said diagrammatic representation of locations in the corresponding real apparatus where measurements are to be made by said technician in order to supply said answering input.

7. The method according to one of claims 4 to 6, c h a r a c t e r i z e d in that said apparatus comprises an electronic circuit and said diagrammatic representation comprises stored schematic and circuit board diagrams thereof which are graphically displayed.

8. The method according to one of claims 4 to 7, c h a r a c t e r i z e d in that said graphic identification includes highlighting the component portion with respect to which a query is made or the component portion which has failed.

9. An expert system for providing information regarding a particular subject matter with respect to which a problem solution is sought, c h a r a c t e r i z e d by: processor means (10), memory means (12) accessible by said processor means wherein said memory stores a plurality of rules including queries directed toward parts or portions of said particular subject matter, said memory means also storing a diagrammatic representation of said subject matter, and

display means (14) operated by said processor means (10) for visually presenting said queries and for visually presenting said diagrammatic representation together with graphic identification of a part or portion of said subject matter to which a query is currently directed.

10. The expert system according to claim 9, c h a r a c t e r i z e d by a troubleshooting assistance system for directing repair of an apparatus wherein said diagrammatic representation comprises stored diagrams of said apparatus.

11. The expert system according to claim 10, c h a r a c t e r i z e d in that said graphic identification includes iconic designation on said diagrammatic representation of locations in the corresponding real apparatus where measurements are to be made in response to a query.

12. The expert system according to one of claims 9 to 11, c h a r a c t e r i z e d in that said display means (14) is operated by said apparatus to provide said graphic identification by means of presenting icons on the display associated with a part or portion of the subject matter to which a query is currently directed.

13. The expert system according to one of claims 9 to 12, c h a r a c t e r i z e d  in that said processor means (10), in response to processor inputs provided in answer to said queries, and in response to said rules, provides a solution output in accordance with said rules.

14. The expert system according to claim 13, c h a r a c t e r i z e d  in that said display means (14) is operated by said processor to provide graphic identification of a part or portion on said diagrammatic representation to which a solution output relates.

0184088

FIG. 1

PROCESSOR 10 — KEYBOARD 11 — MOUSE 13 — MEMORY 12 — DISPLAY 14

FIG. 3B

0184088

FG502 SCHEMATIC (TRIANGLE GENERATOR SECTION)  18

+20V

+17V
(DCPL 1)

-17V

+17V

19  26

30

IS VOLTAGE AT N19 HIGH ?

| YES | NO |
|---|---|

+17V
(DCPL 1)

-17V
(DCPL 1)

-17V
+17V
(DCPL 1)

+17V
(DCPL 1)

26  28

FG502 CIRCUIT BOARD  16

28  28  19

FG502 COMPONENT NOTES  20

CIRCUIT NUMBER: R155
TEKTRONIX PART NUMBER:
315-0821-00
DESCRIPTION: RESISTOR, FIXED,
COMPOSITION, 820ohm,
5%, 0.25W

RULES BEING EXAMINED

RULE 801: IF V(N19) IS HIGH AND
V(N28) IS NOT +0.5V, THEN THE
TRIANGLE COMPARATOR BRIDGE
IS FAILED, REPLACE CR245,
CR246, CR248, CR250

24

TROUBLE SHOOTING ADVICE

THE TRIANGLE WAVE COMPARATOR
HAS FAILED, EXAMINE THAT NEXT  22

FIG.2

```
          ┌─────────────────────────┐
          │     OPEN RULE SET        │─── 32
          └─────────────────────────┘
                      │
          ┌─────────────────────────┐        ___
          │    SELECT NEXT RULE      │─── 34 ( 7 )
          └─────────────────────────┘        ‾‾‾
                      │
          ┌─────────────────────────┐
          │   EXTRACT CONDITION      │─── 36
          │     SET FOR RULE         │
          └─────────────────────────┘
                      │
          ┌─────────────────────────┐
          │ GET NEXT(FIRST)CONDITION │─── 38
          │    IN CONDITION SET      │
          └─────────────────────────┘
                      │
                  ◇ 40
            INFORMATION
            QUERY & DISPLAY  ── YES ── ( 2 )
              SEQUENCE
                 ?
                  │ NO
                  ◇ 42
       NO ──  CONDITION
              SATISFIED  ──────────── ( 3 )
                 ?
                  │ YES
                  ◇ 44
       NO ──   LAST
              CONDITION
                 ?
                  │ YES
                ( 4 )
```

FIG. 3A

FIG.3C

```
< rule > :: =
        IF <observation> THEN <conclusion>
< observation > :: =
        < measurement >< comparator >< value>
< value > :: =
        <constant> I< measurement >
< measurement > :: =
        < voltage measurement> I < current measurement>
< voltage measurement > :: =
        THE VOLTAGE AT < node reference >I
        THE VOLTAGE BETWEEN
                < node reference> AND< node reference >
< current measurement > :: =
        THE CURRENT BETWEEN
                < node reference> AND < node reference >
< conclusion > :: =
        < device > IS OK I< device > IS FAILING
< device > :: =
        {pointing action} I
        < device type>< unsigned integer>
< device type > :: =
        CAPACITOR I DIODE I RESISTOR I TRANSISTOR
< node reference > :: =
        {pointing action} I NODE < unsigned integer>
< constant > :: =
        < integer >< unit >
< integer >:: =
        <unsigned integer > I< sign >< unsigned integer>
< comparator >:: =
        IS I '=' I '>' I '<' I ' >=' I '< =' I' ='
< sign > :: =
        '±'I '-'
< unsigned integer > :: =
        digit > I< digit >< unsigned integer >
< digit > :: =
        0 I 1 I 2 I 3 I 4 I 5 I 6 I 7 I 8 I 9
< unit > :: =
        volts I AMPS
```

# FIG.4

| AMPS | —> | THEN |
|---|---|---|
| AND | —> | < node reference > |
| AT | —> | < node reference > |
| BETWEEN | —> | < node reference > |
| CAPACITOR | —> | < unsigned integer > |
| CURRENT | —> | BETWEEN |
| DIODE | —> | < unsigned integer > |
| IF | —> | THE |
| IS | —> | {OK, FAILING, THE, < integer > } |
| RESISTOR | —> | < unsigned integer > |
| THE | —> | {VOLTAGE, CURRENT} |
| THEN | —> | {DIODE, RESISTOR CAPACITOR, TRANSISTOR } |
| TRANSISTOR | —> | < unsigned integer > |
| VOLTAGE | —> | {AT, BETWEEN} |
| VOLTS | —> | THEN |
| = | —> | {THE,< integer > } |
| > | —> | {THE,< integer > } |
| < | —> | {THE,< integer > } |
| >= | —> | {THE,< integer > } |
| <= | —> | {THE,< integer > } |
| ¬= | —> | {THE,< integer > } |
| < integer > | —> | {VOLTS, AMPS} |
| < unsigned integer > | —> | {AND, IS, THEN} |
| <node reference> | —> | {THEN, AND, IS, ' = ', ' > ', ' < ', ' > = ', ' < = ', ' ¬ = '} |

# FIG.5

8/8

0184088

```
        ┌─────────┐
        │  START  │
        └────┬────┘
             │
       ╱─────────╲
      ╱   PARSE    ╲───── 110
      ╲   TREE     ╱
       ╲─────────╱
             │
      ┌────────────┐
      │ REMOVE ANY │
      │ REDUNDANT  │──── 112
      │   NODES    │
      └─────┬──────┘
            │
      ┌────────────┐
      │ CONSTRUCT  │
      │ FUNCTIONAL │──── 114
      │DESCRIPTION │
      │ EQUATIONS  │
      └─────┬──────┘
            │
      ┌────────────┐
      │  PERFORM   │
      │  SEMANTIC  │──── 116
      │  CHECKING  │
      └─────┬──────┘
            │
       ◇─────────◇ ──── 118
      ◇ SEMANTICS ◇──────────┐
       ◇  O.K.?  ◇           │
        ◇───────◇            │
            │            ┌────────┐
            │            │  FAIL  │──── 120
      ┌────────────┐     └────────┘
      │ TRANSFORM  │
      │ FUNCTIONAL │
      │ EQUATIONS  │──── 122
      │     TO     │
      │ FUNCTIONAL │        FIG. 7
      │ STRUCTURES │
      └─────┬──────┘
            │
      ┌────────────┐
      │  CONVERT   │
      │ FUNCTIONAL │
      │ STRUCTURES │──── 124
      │     TO     │
      │  PROLOG    │
      │  CLAUSES   │
      └─────┬──────┘
            │
       ╱─────────╲
      ╱  STORE     ╲──── 126
      ╲  CLAUSES   ╱
       ╲─────────╱
            │
        ┌───────┐
        │  END  │
        └───────┘
```

0184088

FIG.6

PREPROCESS GRAMMAR & DICTIONARY — 80

CONTROLLER — 82

88 — WORD IN BUFFER | MOUSE ACTIVITY | KEYBOARD ACTIVITY — 86

84

PUT DUMMY FAIL IN BUFFER — 106

PUT CHAR. IN BUFFER — 87

COMPARE WITH EXPECTATIONS — 90

MATCH

NO MATCH

SPELLING CORRECTED — 98

UPDATE PARSES — 92

YES

PART OF PHRASE — 100

94

FORM EXPECTATIONS

YES

STORE TAIL OF PHRASE — 102

NO

DISPLAY MENU — 104

NO

PARSE TREE — 96

YES

82a

CONTROLLER

MOUSE ACTIVITY | KEYBOARD ACTIVITY

84a | 86a

CHAR. TO BUFFER — 88b

PUT SELECTION IN BUFFER — 88a

WORD — 88c

NO | YES